# EUROPÄISCHE PATENTSCHRIFT

(11) **EP 3 956 197 B1**
(45) Veröffentlichungstag und Bekanntmachung des Hinweises auf die Patenterteilung: **30.10.2024**
(21) Anmeldenummer: 20728959.6
(22) Anmeldetag: 11.05.2020
(51) Int. Cl.: B61L 29/30, B61L 27/53, H02G 3/04

(54) **DIAGNOSESYSTEM FÜR EINE BAHNÜBERGANGSSICHERUNGSANLAGE, STROMSENSOR FÜR EIN DERARTIGES DIAGNOSESYSTEM SOWIE VERFAHREN ZUR INSTALLATION EINES DERARTIGEN DIAGNOSESYSTEMS**
DIAGNOSTIC SYSTEM FOR A LEVEL-CROSSING SAFEGUARDING SYSTEM, CURRENT SENSOR FOR SUCH A DIAGNOSTIC SYSTEM, AND METHOD FOR INSTALLING SUCH A DIAGNOSTIC SYSTEM
SYSTÈME DE DIAGNOSTIC POUR UNE INSTALLATION DE SÉCURITÉ DE PASSAGE À NIVEAU, CAPTEUR DE COURANT POUR UN TEL SYSTÈME DE DIAGNOSTIC AINSI QUE PROCÉDÉ D'INSTALLATION D'UN TEL SYSTÈME DE DIAGNOSTIC

(30) Priorität: 31.05.2019 DE 102019208017; 26.06.2019 DE 102019209237
(43) Veröffentlichungstag der Anmeldung: 23.02.2022
(73) Patentinhaber: Siemens Mobility GmbH, 81739 München (DE)
(72) Erfinder: SCHULZE, Michael, 12557 Berlin (DE); VOGT, Olaf, 12555 Berlin (DE); BUSSE, Robert, 14621 Schönwalde (DE)
(74) Vertreter: Siemens Patent Attorneys
(86) Internationale Anmeldenummer: PCT/EP2020/063034
(87) Internationale Veröffentlichungsnummer: WO 2020/239419

(56) Entgegenhaltungen:
- EP-A1- 0 627 802
- WO-A1-2014/059487
- DE-A1- 102015 201 440
- US-A- 5 735 492
- US-A1- 2013 256 466

## Beschreibung

Die Erfindung betrifft ein Diagnosesystem für eine Bahnübergangssicherungsanlage.

Ein derartiges Diagnosesystem ist beispielsweise aus dem Artikel "IDIS plus W95 - ein modernes Diagnosesystem für EBÜT 80", Signal + Draht (90) 11/98, Seiten 14-19 bekannt. Bei diesem Diagnosesystem ist eine spezielle Relaisschnittstelle vorgesehen, um Informationen ausgewählter Adaptionspunkte der Relaisschaltung zu erfassen und an einen Diagnose-PC auszugeben. Derartige Relaisschnittstellen erfordern hohen Entwicklungsaufwand.

Die erwähnte EBÜT 80 (Einheits-Bahnübergangstechnik) beherrscht beispielsweise eine Vielzahl (bis zu 21) Schaltfälle, zu denen es wünschenswert ist, Informationen zu erfassen (vgl. "Bahnübergangs-Sicherungstechnik RBÜT realisierungsnah planen", Signal + Draht (94) 5/2002, Seiten 14-17 bekannt.

Aus der Praxis ist außerdem bekannt, dass bei einer EBÜT 80 die Relaisschaltung elektrische Verbindungskabel aufweist, von denen zumindest eine Mehrzahl zumindest abschnittsweise in einem Kabelkanal geführt ist, dessen Zugangslängsseite mit einer lösbaren Abdeckung versehen ist.

Ferner ist aus der Druckschrift WO 2014/059487 A1 ein zusätzliches Warnsystem für einen Bahnübergang bekannt, bei dem Kabel über Kanäle zu einem Zentralschrank geführt sind, welcher ein Gehäuse hat und eine Bahnübergangssteuerung ist.

Aus der Druckschrift EP 0 627 802 A1 ist ein Verteilerkanal zur Verteilung von isolierten Kabeln und mehreren innen in dem Verteilerkanal angeordneten Anschlusseinrichtungen bekannt. Beispielsweise ist der Verteilerkanal mit drei Haltern versehen - einem oberen Halter für Kabel in Form von Starkstromkabeln und Stromabnehmermodule, einem mittleren Halter für die Anschlusseinrichtungen und einem unteren Halter für Datenkabel und Telekabel. Die mehreren Stromabnehmermodule sind jeweils mit einem Schlitz oder eine Kerbe versehen, um über eine Kante des Halters (Trägers) 22 gedrückt werden zu können. Eine an dem Verteilerkanal beispielsweise verschiebbar oder klappbar gehaltene Öffnungsplatte (Frontplatte) verbirgt sowohl die Kabel als auch die Anschlusseinrichtungen. Sie kann geöffnet werden, um Zugang zum Inneren des Verteilerkanals zu gewähren.

Ausgehend von einem Diagnosesystem mit den Merkmalen des Oberbegriffes des Patentanspruches 1 liegt der Erfindung die Aufgabe zu Grunde, das Diagnosesystem, insbesondere im Hinblick auf den Entwicklungsaufwand und die damit verbundenen hohen Kosten, zu vereinfachen.

Gelöst wird diese Aufgabe durch ein erfindungsgemäßes Diagnosesystem gemäß Anspruch 1, bei dem die Abdeckung zur Aufnahme mehrerer Stromsensoren des Diagnosesystems geeignet ausgebildet ist und die mehreren Stromsensoren in Längsrichtung der Abdeckung nebeneinander in dieser Abdeckung angeordnet, insbesondere befestigt, sind.

Somit ist es möglich die gewünschten Informationen hinsichtlich der Schaltfälle ohne Verwendung einer speziellen Relaisschnittstelle zu erfassen. Die Sensoren sind somit einfach installierbar, so dass das Diagnosesystem leicht in bestehenden Bahnübergangssicherungsanlagen nachgerüstet werden kann. Vorteilhaft ist insbesondere, dass das erfindungsgemäße Diagnosesystem im Hinblick einen erforderlichen Nachweis dessen, dass es nicht auf das zu diagnostizierende Primärsystem - hier die Bahnübergangssicherungsanlage - zurückwirkt, sehr einfach und damit kostengünstig ist.

Es wird als vorteilhaft angesehen, wenn die Breite der Abdeckung im Wesentlichen der Breite des Kabelkanals entspricht. Dies hat den Vorteil, der Zugang zu anderen Teilen der Bahnübergangssicherungsanlage nicht erschwert wird.

Auch wird es als vorteilhaft angesehen, wenn die Tiefe der Abdeckung kleiner oder gleich der Tiefe des Kabelkanals ist. Dies hat den Vorteil, dass die Tragfähigkeit des Kabelkanals genutzt werden kann, ohne diesen speziell stärker fixieren zu müssen.

In einer bevorzugten Ausgestaltung der Erfindung ist vorgesehen, dass die mehreren Stromsensoren einen Kommunikationsbus bildend an die Datensammeleinrichtung angeschlossen sind und an diese ihre Messdaten ausgeben. Damit kann insbesondere sichergestellt werden, dass die Messdaten in ihrer zeitlichen Reihenfolge korrekt erfasst werden, wobei gerade das Wissen über die zeitliche Reihenfolge der Messdaten für eine genaue Diagnose der Schaltfälle von besonderem Vorteil ist.

Es wird als vorteilhaft angesehen, wenn die Stromsensoren geeignet ausgebildet sind, die Messdaten mittels eines seriellen Übertragungsprotokolls über den Kommunikationsbus an die Datensammeleinrichtung zu übertragen. Als Kommunikationsbus kann beispielsweise ein Modbus, insbesondere ein Modbus RTU, zum Einsatz kommen.

Vorzugsweise ist die Datensammeleinrichtung als eine Internet-der-Dinge-Box (dem Fachmann bekannt unter der englischen Bezeichnung: Internet of Things Box, kurz IoT-Box) ausgebildet, welche eine Kommunikationsschnittstelle, insbesondere eine Antenne, zur Kommunikation mit einer übergeordneten Informationstechnik-Infrastruktur, welche beispielsweise in Form einer Cloud vorliegt, aufweist.

Die Erfindung betrifft auch einen Stromsensor gemäß Anspruch 7 für ein erfindungsgemäßes Diagnosesystem, bei welchem ein Abschnitt zum Umgreifen eines ihm zugeordneten der elektrischen Verbindungskabel nach Art einer Schelle öffenbar ist.

Es wird als vorteilhaft angesehen, wenn der Teil des Stromsensors, welcher nach Art einer Schelle ausgebildet ist, einen Teil eines Sensorkerns bildet und zumindest teilweise in den Kabelkanal hineinragt.

Es ist vorgesehen, dass der Stromsensor maximal 50mm breit, maximal 50mm tief und maximal 70mm lang ist, um möglichst wenig Bauraum zu beanspruchen.

Vorzugsweise ist der Stromsensor weniger als 45mm breit, weniger als 40mm tief und weniger als 45mm lang.

Vorzugsweise ist der Stromsensor als Gleichstromsensor mit einem Messbereich von 10 bis 200mA ausgebildet.

Es wird ferner als vorteilhaft angesehen, wenn der Stromsensor jeweils einen als Buchse ausgebildeten ersten Anschluss und einen als Stecker ausgebildeten zweiten Anschluss aufweist, wobei der erste Anschluss an einem Kabelende eines, insbesondere zumindest 15 cm langen, ersten Kabels als Micro USB-Buchse ausgebildet ist und wobei der zweite Anschluss an einem Kabelende eines, insbesondere zumindest 15 cm langen, zweiten Kabels als Micro USB-Stecker ausgebildet ist.

Die Erfindung betrifft außerdem ein Verfahren gemäß Anspruch 14 zur Installation eines Diagnosesystems in einer Bahnübergangssicherungsanlage, deren Relaisschaltung elektrische Verbindungskabel aufweist, von denen zumindest eine Mehrzahl zumindest abschnittsweise in einem Kabelkanal geführt ist, dessen Zugangslängsseite mit einer lösbaren Abdeckung versehen ist. Erfindungsgemäß wird die Abdeckung zur Aufnahme mehrerer Stromsensoren des Diagnosesystems geeignet bereitgestellt und es werden mehrere Stromsensoren in Längsrichtung der Abdeckung nebeneinander in dieser Abdeckung angeordnet, insbesondere befestigt, wobei ein Abschnitt eines jeweiligen der Stromsensoren zum Umgreifen eines ihm zugeordneten der elektrischen Verbindungskabel nach Art einer Schelle geöffnet und nach dem Einlegen des Verbindungskabels wieder geschlossen wird.

Vorzugsweise werden die mehreren Stromsensoren einen Kommunikationsbus bildend an eine Datensammeleinrichtung angeschlossen und geben ihre Messdaten, insbesondere mittels eines seriellen Übertragungsprotokolls, an diese Datensammeleinrichtung aus. Wie bereits erwähnt, kann als Kommunikationsbus beispielsweise ein Modbus, insbesondere ein Modbus RTU, zum Einsatz kommen.

Die Erfindung ist im Weiteren anhand der Figuren 1 bis 7 näher erläutert. Dabei zeigen die
- Figur 1: eine schematische Darstellung einer Bahnübergangssicherungsanlage mit Diagnosesystem nach dem Stand der Technik, die
- Figur 2: eine schematische Darstellung einer Bahnübergangssicherungsanlage mit einer ersten Ausführungsform des erfindungsgemäßen Diagnosesystems, die
- Figur 3: eine Schnittdarstellung der ersten Ausführungsform des erfindungsgemäßen Diagnosesystems entlang der Linie III-III in Figur 2, die
- Figur 4: eine Schnittdarstellung einer zweiten Ausführungsform des erfindungsgemäßen Diagnosesystems und die
- Figuren 5 bis 7: verschiedene Ansichten eines Stromsensors des erfindungsgemäßen Diagnosesystems.

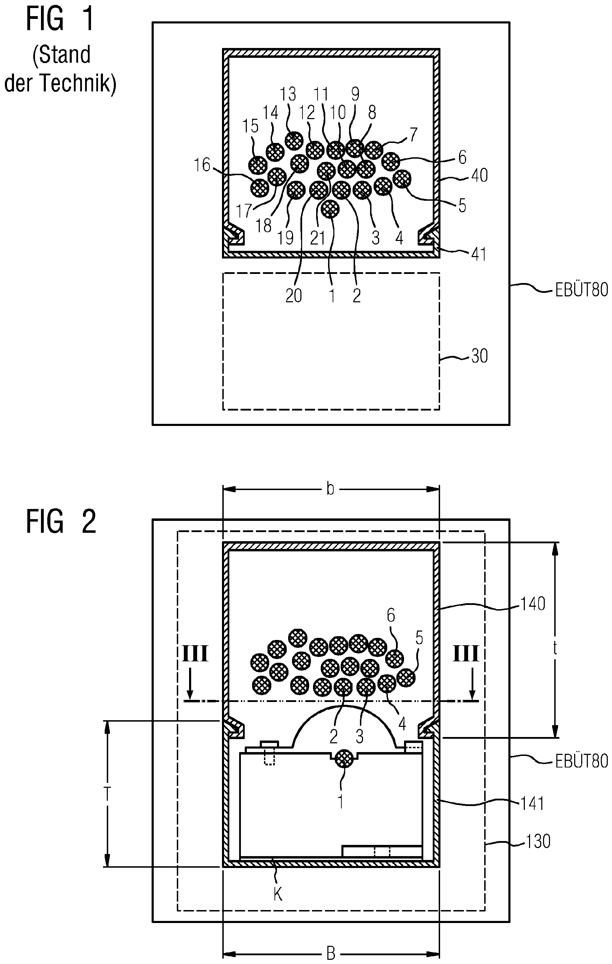

Gemäß der Figur 1 weisen - wie eingangs bereits erwähnt - aus der Praxis bekannte Bahnübergangssicherungsanlagen EBÜT80 ein Diagnosesystem 30 auf. Außerdem weist die Relaisschaltung dieser bekannten Bahnübergangssicherungsanlagen EBÜT80 elektrische Verbindungskabel 1-21 auf, von denen zumindest eine Mehrzahl zumindest abschnittsweise in einem Kabelkanal 40 geführt ist, dessen Zugangslängsseite mit einer lösbaren Abdeckung 41 versehen ist.

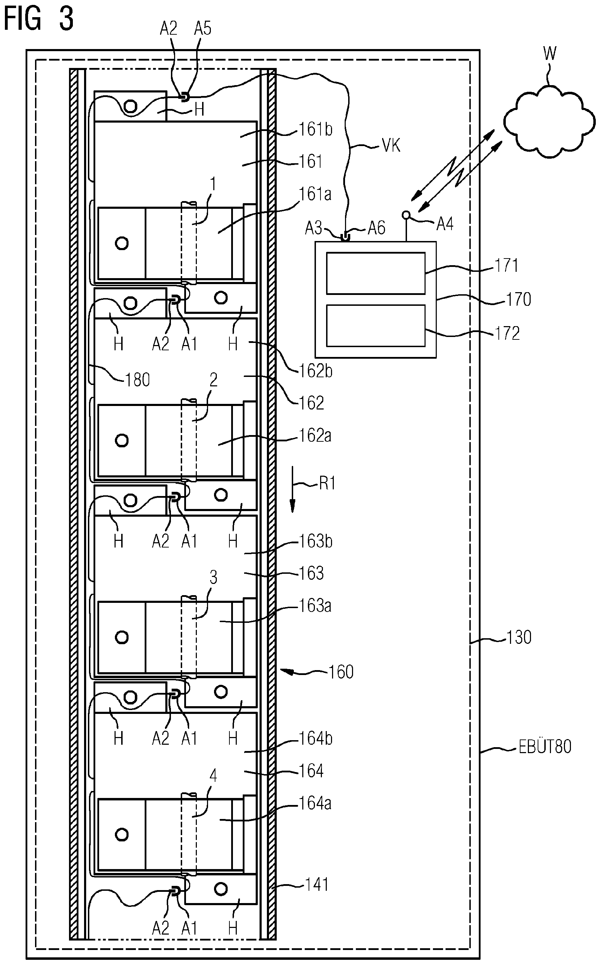

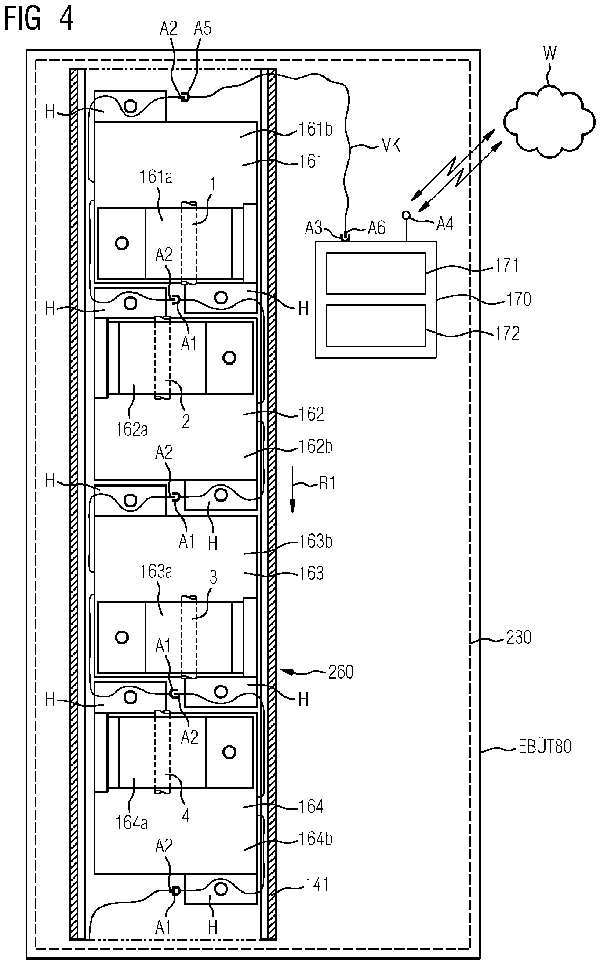

Bei der in den Figuren 2 und 3 gezeigten Bahnübergangssicherungsanlage EBÜT80, welche eine ersten Ausführungsform 130 des erfindungsgemäßen Diagnosesystems aufweist, und bei der in der Figur 4 gezeigten Bahnübergangssicherungsanlage EBÜT80, welche zweite Ausführungsform 230 des erfindungsgemä-ßen Diagnosesystems aufweist, ist die jeweilige Abdeckung 141 zur Aufnahme mehrerer Stromsensoren 161-164 des Diagnosesystems 130 bzw. 230 geeignet ausgebildet. Die Stromsensoren 161-164 bilden zusammen mit der Abdeckung 141 eine Stromsensoreinrichtung 160 bzw. 260.

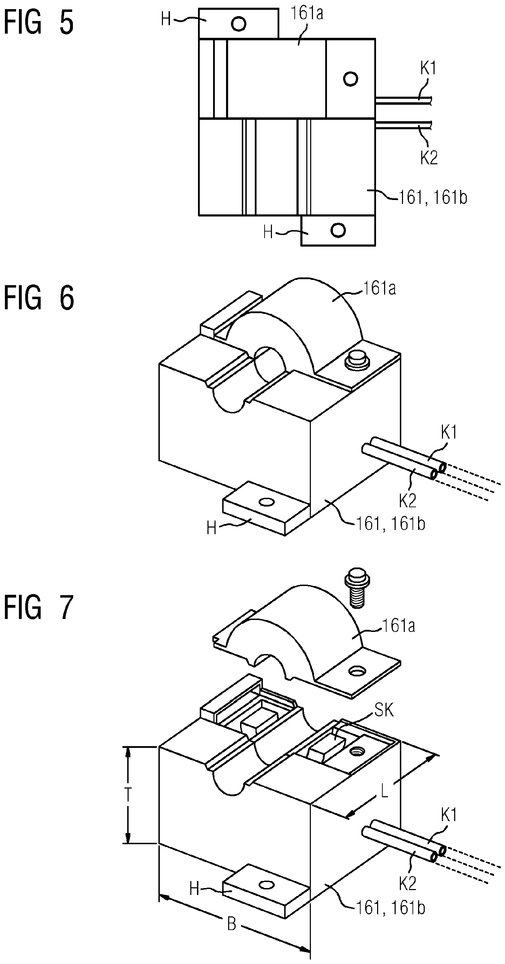

Die Stromsensoren 161-164 sind beispielsweise Hall-Effekt-Sensoren, welche in bekannter Weise einen Sensorkern SK (vgl. Figur 7) aufweisen. Die Erfindung ist jedoch nicht auf Hall-Effekt-Sensoren beschränkt. Insbesondere können auch Sensoren zum Einsatz kommen, die nicht auf den Hall-Effekt, sondern auf anderen Wirkprinzipien beruhen.

Gemäß den Figuren 3 und 4 sind die mehrere Stromsensoren 161-164 bei beiden Ausführungsformen 130 und 230 in Längsrichtung R1 der Abdeckung 141 nebeneinander in dieser Abdeckung 141 angeordnet.

Die beiden Ausführungsformen 130 und 230 des erfindungsgemäßen Diagnosesystems unterscheiden sich lediglich dahingehend, dass die Stromsensoren 161-164 bei der ersten Ausführungsform 130 alle gleich ausgerichtet sind, während sie bei der zweiten Ausführungsformen 230 wechselweise um 180° gedreht sind.

Die Stromsensoren 161-164 sind vorzugsweise mittels doppelseitiger Klebestreifen K am Boden der Abdeckung 141 angeklebt oder aber mittels Schraubverbindungen (bzw. damit vergleichbarer Verbindungen; beispielsweise Steck- oder Rastverbindungen), die Haltestege H der Stromsensoren 161-164 durchgreifen befestigt.

Die Breite B der Abdeckung 141 entspricht der Breite b des Kabelkanals 140 Sie beträgt bei den gezeigten Ausführungsformen 50mm.

Die Tiefe T der Abdeckung ist kleiner oder gleich der Tiefe t des Kabelkanals ist.

Das Diagnosesystem 130 bzw. 230 umfasst eine Datensammeleinrichtung 171.

Die Stromsensoren 161-164 weisen jeweils einen als Buchse ausgebildeten ersten Anschluss A1 und einen als Stecker ausgebildeten zweiten Anschluss A2 auf. Der erste Anschluss A1 ist an einem Kabelende eines, insbesondere zumindest 15 cm langen, ersten Kabels K1 (USB-Kabel) als Micro USB-Buchse ausgebildet ist. Der zweite Anschluss A2 ist an einem Kabelende eines, insbesondere zumindest 15 cm langen, zweiten Kabels (USB-Kabel) K2 als Micro USB-Stecker ausgebildet ist.

Die mehreren Stromsensoren 161-164 sind einen Kommunikationsbus 180 bildend an die Datensammeleinrichtung 171 angeschlossen und geben über den Kommunikationsbus 180 ihre Messdaten an die Datensammeleinrichtung 171 aus. Hierzu sie in Reihe miteinander verbunden.

Die Datensammeleinrichtung 171 ist als eine Internet-der-Dinge-Box (IoT-Box) ausgebildet, welche als Teil einer Datensammelanordnung 170 ausgebildet ist. Zu der Datensammelanordnung 170 gehört auch eine Stromversorgungseinrichtung 172, welche die Internet-der-Dinge-Box 171 und über die verbundenen USB-Kabel auch die mehreren Stromsensoren 161-164 speist.

Die Datensammeleinrichtung 171 (Internet-der-Dinge-Box) weist eine Micro-USB-Schnittstelle A3 - hier in Form einer Micro USB-Buchse - auf. Außerdem weist sie eine Kommunikationsschnittstelle A4, insbesondere eine Antenne, zur Kommunikation mit einer übergeordneten Informationstechnik-Infrastruktur W auf, welche hier von einer sogenannten Cloud gebildet ist.

Wie gezeigt ist der Micro USB-Stecker A2 des ersten Stromsensors 161 in eine die Micro USB-Buchse A5 eines USB-Verbindungskabels VK eingesteckt. Ein Micro USB-Stecker A6 des USB-Verbindungskabels VK ist in die Micro USB-Buchse A3 der Internet-der-Dinge-Box 171 eingesteckt.

Der Micro USB-Stecker A2 des zweiten Stromsensors 162 ist in die Micro USB-Buchse A1 des ersten Stromsensors 161 eingesteckt. Der Micro USB-Stecker A2 des dritten Stromsensors 163 ist in die Micro USB-Buchse A1 des zweiten Stromsensors 162 eingesteckt. Der Micro USB-Stecker A2 des vierten Stromsensors 164 ist in die Micro USB-Buchse A1 des dritten Stromsensors 163 eingesteckt. Und der Micro USB-Stecker des hier nicht gezeigte letzten Stromsensor ist in die Micro USB-Buchse des hier ebenfalls nicht gezeigten vorletzten Stromsensors eingesteckt.

Die mehreren Stromsensoren 161-164 sind jeweils geeignet ausgebildet die Messdaten mittels eines Modbus Übertragungsprotokolls über den Kommunikationsbus 180 (Modbus RTU) an die Datensammeleinrichtung 171 zu übertragen.

Wie die Figuren zeigen, ist ein Abschnitt 161a-164a eines jeweiligen der Stromsensoren 161-164 zum Umgreifen eines ihm zugeordneten der elektrischen Verbindungskabel 1-4 nach Art einer Schelle öffenbar.

Der Teil 161a-164a des jeweiligen Stromsensors 161-164, welcher nach Art einer Schelle ausgebildet ist, bildet zusammen mit einem weiteren Teil des Stromsensors 161b-164b einen zu schließenden Sensorkern. Der jeweilige Teil 161a-164a der Stromsensoren ragt zumindest teilweise in den Kabelkanal hinein (siehe insbesondere die Figuren 2 und 5 bis 7).

Jeder der Stromsensoren 161-164 ist maximal 50mm breit, maximal 50mm tief und maximal 70mm lang. Die gezeigte Ausführungsform des Stromsensors ist 45mm breit, 37,5 mm tief. Sein Abschnitt zwischen den Haltestegen ist 44mm lang.

Jeder der Stromsensoren ist als Gleichstromsensor mit einem Messbereich von 10 bis 200mA ausgebildet.

Bei einer weiteren, hier nicht dargestellten Ausführungsform des erfindungsgemäßen Diagnosesystems sind die Sensoren in zumindest zwei Sensorgruppen aufgeteilt und separaten Kabelkanälen zugeordnet. Es bilden also mehrere Stromsensoren eine erste Sensorgruppe und mehrere weitere Stromsensoren bilden zumindest eine weitere Sensorgruppe. Dabei ist die eine Sensorgruppe wie bei den beiden ersten Ausführungsformen des erfindungsgemäßen Diagnosesystems in einer Abdeckung eines Kabelkanals angeordnet und die zumindest eine weitere Sensorgruppe ist in einer weiteren Abdeckung eines weiteren Kabelkanals angeordnet. Die mehreren Stromsensoren und die weiteren mehreren Stromsensoren sind - auch hier einen Kommunikationsbus bildend - an eine Datensammeleinrichtung angeschlossen und geben über den Kommunikationsbus ihre Messdaten an die Datensammeleinrichtung aus. Die Stromsensoren weisen auch hierbei jeweils einen als USB-Buchse ausgebildeten ersten Anschluss und einen als USB-Stecker ausgebildeten zweiten Anschluss auf. Durch die verwendeten Stecker-/Buchse-Kombinationen ist es möglich, größere Abstände zwischen den räumlich abgesetzten Sensorgruppen mit standard-Micro-USB-Kabeln, welche an einem Ende eine USB-Buchse und am anderen Ende einen USB-Stecker ausweisen, zu überbrücken.

Zur Installation der Stromsensoren wird die Abdeckung 141 bereitgestellt, welche zur Aufnahme der mehrerer Stromsensoren 161-164 des Diagnosesystems geeignet ausgebildet ist. Der Teil 161a-164a eines jeweiligen der Stromsensoren 161-164 wird zum Umgreifen eines ihm zugeordneten der elektrischen Verbindungskabel 1-4 nach Art einer Schelle geöffnet und nach dem Einlegen des jeweiligen Verbindungskabels 1-4 wieder geschlossen. Die mehreren Stromsensoren 161-164 werden in Längsrichtung R1 der Abdeckung 141 nebeneinander in dieser Abdeckung 141 angeordnet und mittels der Klebestreifen K befestigt. Die mehreren Stromsensoren 161-164 geben über den Kommunikationsbus 180 ihre Messdaten an die Datensammeleinrichtung 171 aus.

## Patentansprüche

1. Diagnosesystem (130;230) für eine Bahnübergangssicherungsanlage (EBÜT80), deren Relaisschaltung elektrische Verbindungskabel (1-21) aufweist, von denen zumindest eine Mehrzahl zumindest abschnittsweise in einem Kabelkanal (140) geführt ist, dessen Zugangslängsseite mit einer lösbaren Abdeckung (141) versehen ist,
**dadurch gekennzeichnet,**
**dass** die Abdeckung (141) zur Aufnahme mehrerer Stromsensoren (161-164) des Diagnosesystems (130;230) geeignet ausgebildet ist und
**dass** die mehreren Stromsensoren (161-164) in Längsrichtung (R1) der Abdeckung (141) nebeneinander in dieser Abdeckung angeordnet, insbesondere befestigt, sind.

2. Diagnosesystem (130;230) nach Anspruch 1,
**dadurch gekennzeichnet, dass**
die Breite (B) der Abdeckung im Wesentlichen der Breite (b) des Kabelkanals entspricht.

3. Diagnosesystem (130;230) nach einem der Ansprüche 1 oder 2,
**dadurch gekennzeichnet, dass**
die Tiefe (T) der Abdeckung kleiner oder gleich der Tiefe (t) des Kabelkanals ist.

4. Diagnosesystem (130;230) nach einem der Ansprüche 1 bis 3, **gekennzeichnet, durch**
eine Datensammeleinrichtung (171),
wobei die mehreren Stromsensoren (161-164) einen Kommunikationsbus (180) bildend an die Datensammeleinrichtung (171) angeschlossen sind und an diese ihre Messdaten ausgeben.

5. Diagnosesystem (130;230) nach Anspruch 4,
**dadurch gekennzeichnet, dass**
die Stromsensoren (161-164) geeignet ausgebildet sind die Messdaten mittels eines seriellen Übertragungsprotokolls über den Kommunikationsbus (180) an die Datensammeleinrichtung (171) zu übertragen.

6. Diagnosesystem (130;230) nach einem der Ansprüche 4 oder 5,
**dadurch gekennzeichnet, dass**
die Datensammeleinrichtung (171) als eine Internet-der-Dinge-Box ausgebildet ist, welche eine Kommunikationsschnittstelle (A4), insbesondere eine Antenne, zur Kommunikation mit einer übergeordneten Informationstechnik-Infrastruktur (W) aufweist.

7. Stromsensor (161-164) für ein Diagnosesystem (130;230) nach einem der Ansprüche 1 bis 6,
**dadurch gekennzeichnet, dass**
ein Abschnitt (161a-164a) des Stromsensors zum Umgreifen eines ihm zugeordneten der elektrischen Verbindungskabel /1-4) nach Art einer Schelle öffenbar ist.

8. Stromsensor (161-164) nach Anspruch 7,
**dadurch gekennzeichnet, dass**
der Teil des Stromsensors, welcher nach Art einer Schelle ausgebildet ist, einen Teil eines Sensorkerns (SK) bildet und zumindest teilweise in den Kabelkanal (140) hineinragt.

9. Stromsensor (161-164) nach einem der Ansprüche 7 oder 8,
**dadurch gekennzeichnet, dass**
der Stromsensor maximal 50mm, vorzugsweise weniger als 45mm, breit ist.

10. Stromsensor (161-164) nach einem der Ansprüche 7 bis 9,
**dadurch gekennzeichnet, dass**
der Stromsensor maximal 50mm, vorzugsweise weniger als 40mm, tief ist.

11. Stromsensor (161-164) nach einem der Ansprüche 7 bis 10, **dadurch gekennzeichnet, dass**
der Stromsensor maximal 70mm, vorzugsweise weniger als 45mm lang ist.

12. Stromsensor (161-164) nach einem der Ansprüche 7 bis 11, **dadurch gekennzeichnet, dass**
der Stromsensor als Gleichstromsensor mit einem Messbereich von 10 bis 200mA ausgebildet ist.

13. Stromsensor (161-164) nach einem der Ansprüche 7 bis 12, **dadurch gekennzeichnet, dass**
der Stromsensor jeweils einen als Buchse ausgebildeten ersten Anschluss (A1) und einen als Stecker ausgebildeten zweiten Anschluss (A2) aufweist,
wobei der erste Anschluss an einem Kabelende eines, insbesondere zumindest 15 cm langen, ersten Kabels (K1) als Micro USB-Buchse ausgebildet ist und
wobei der zweite Anschluss an einem Kabelende eines, insbesondere zumindest 15 cm langen, zweiten Kabels (K2) als Micro USB-Stecker ausgebildet ist.

14. Verfahren zur Installation eines Diagnosesystems in einer Bahnübergangssicherungsanlage, deren Relaisschaltung elektrische Verbindungskabel aufweist, von denen zumindest eine Mehrzahl zumindest abschnittsweise in einem Kabelkanal geführt ist, dessen Zugangslängsseite mit einer lösbaren Abdeckung versehen ist,
**dadurch gekennzeichnet,**
**dass** die Abdeckung zur Aufnahme mehrerer Stromsensoren des Diagnosesystems geeignet bereitgestellt wird und
**dass** mehrere Stromsensoren in Längsrichtung der Abdeckung nebeneinander in dieser Abdeckung angeordnet, insbesondere befestigt, werden,
wobei ein Abschnitt eines jeweiligen der Stromsensoren zum Umgreifen eines ihm zugeordneten der elektrischen Verbindungskabel nach Art einer Schelle geöffnet und nach dem Einlegen des Verbindungskabels wieder geschlossen wird.

15. Verfahren nach Anspruch 14,
**dadurch gekennzeichnet, dass**
die mehreren Stromsensoren einen Kommunikationsbus bildend an eine Datensammeleinrichtung angeschlossen werden und an diese Datensammeleinrichtung ihre Messdaten, insbesondere mittels eines seriellen Übertragungsprotokolls, ausgeben.

## Claims

1. Diagnostic system (130;230) for a level crossing safeguarding system (EBÜT80), of which the relay circuit has electrical connection cables (1-21), of which at least a plurality are guided in a cable duct (140), at least in sections, of which the access longitudinal side is provided with a detachable covering (141),
**characterised in that**
the cover (141) is suitably embodied for accommodating a plurality of current sensors (161-164) of the diagnostic system (130;230) and
the plurality of current sensors (161-164) are arranged, in particular fastened, adjacent to one another in the longitudinal direction (R1) of the covering (141) in said covering.

2. Diagnostic system (130;230) according to claim 1,
**characterised in that**
the width (B) of the covering (141) corresponds to the width (b) of the cable duct.

3. Diagnostic system (130;230) according to one of claims 1 or 2,
**characterised in that**
the depth (T) of the covering is less than or equal to the depth (t) of the cable duct.

4. Diagnostic system (130;230) according to one of claims 1 to 3,
**characterised by**
a data collection facility (171),
wherein the plurality of current sensors (161-164), forming a communication bus (180), are connected to the data collection facility (171) and output their measurement data to said data collection facility.

5. Diagnostic system (130;230) according to claim 4,
**characterised in that**
the current sensors (161-164) are suitably embodied to transfer the measurement data to the data collection facility (171) by means of a serial transfer protocol via the communication bus (180).

6. Diagnostic system (130;230) according to one of claims 4 or 5,
**characterised in that**
the data collection facility (171) is embodied as an Internet of Things box, which has a communication interface (A4), in particular an antenna, for communicating with a higher-level information technology infrastructure (W).

7. Current sensor (161-164) for a diagnostic system (130;230) according to one of claims 1 to 6,
**characterised in that**
a section (161a-164a) of the current sensor can be opened in order to encompass one of the electrical connection cables (1-4) that is assigned to it in the manner of a clamp.

8. Current sensor (161-164) according to claim 7,
**characterised in that**
the part of the current sensor that is embodied in the manner of a clamp forms a part of a sensor core (SK) and protrudes at least partially into the cable duct (140).

9. Current sensor (161-164) according to one of claims 7 or 8, **characterised in that**
the current sensor is at most 50mm wide, preferably less than 45mm wide.

10. Current sensor (161-164) according to one of claims 7 to 9,
**characterised in that**
the current sensor is at most 50mm deep, preferably less than 40mm deep.

11. Current sensor (161-164) according to one of claims 7 to 10,
**characterised in that**
the current sensor is at most 70mm long, preferably less than 45mm long.

12. Current sensor (161-164) according to one of claims 7 to 11,
**characterised in that**
the current sensor is embodied as a direct current sensor with a measurement range from 10 to 200mA.

13. Current sensor (161-164) according to one of claims 7 to 12,
**characterised in that**
the current sensor in each case has a first connection (A1) embodied as a socket and a second connection (A2) embodied as a plug,
wherein the first connection is embodied as a Micro USB socket at one cable end of a first cable (K1), which in particular is at least 15 cm long, and
wherein the second connection is embodied as a Micro USB plug at one cable end of a second cable (K2), which in particular is at least 15 cm long.

14. Method for installing a diagnostic system in a level crossing safeguarding system, of which the relay circuit has electrical connection cables, of which at least a plurality are guided in a cable duct, at least in sections, of which the access longitudinal side is provided with a detachable covering,
**characterised in that**
the covering is suitably provided to accommodate a plurality of current sensors of the diagnostic system, and a plurality of current sensors are arranged, in particular fastened, adjacent to one another in the longitudinal direction of the covering in said covering,
wherein a section of a respective one of the current sensors is opened in order to encompass one of the electrical connection cables that is assigned to it in the manner of a clamp, and is closed again once the connection cable has been inserted.

15. Method according to claim 14,
**characterised in that**
the plurality of current sensors, forming a communication bus, are connected to a data collection facility and output their measurement data to said data collection facility, in particular by means of a serial transfer protocol.

## Revendications

1. Système (130;230) de diagnostic pour une installation (EBÜT80) de sécurité de passage à niveau, dont le circuit relais a des câbles (1-21) de jonction électrique, dont au moins une pluralité passe au moins par tronçon dans une conduite (140) de câble, dont le côté longitudinal d'entrée est pourvu d'un recouvrement (141) amovible,
**caractérisé**
**en ce que** le recouvrement (141) est constitué de manière appropriée à la réception de plusieurs capteurs (161-164) de courant du système (130;230) de diagnostic et
**en ce que** les plusieurs capteurs (161-164) de courant sont disposés, en étant notamment fixés, dans la direction (R1) longitudinale du recouvrement (141) les uns à côté des autres dans ce recouvrement.

2. Système (130;230) de diagnostic suivant la revendication 1,
**caractérisé en ce que**
la largeur (B) du recouvrement correspond sensiblement à la largeur (b) de la conduite de câble.

3. Système (130;230) de diagnostic suivant l'une des revendications 1 ou 2,
**caractérisé en ce que**
la profondeur (T) du recouvrement est inférieure ou égale à la profondeur (t) de la conduite de câble.

4. Système (130;230) de diagnostic suivant l'une des revendications 1 à 3,
**caractérisé par**
un dispositif (171) de recueil de données,
dans lequel les plusieurs capteurs (161-164) de courant sont, en formant un bus (180) de communication, raccordés au dispositif (171) de collecte de données et lui donnent leurs données de mesure.

5. Système (130;230) de diagnostic suivant la revendication 4,
**caractérisé en ce que**
les capteurs (161-164) de courant sont constitués, de manière appropriée à transmettre les données de mesure, au moyen d'un protocole de transmission série au dispositif (171) de recueil de données en passant par le bus (180) de communication.

6. Système (130;230) de diagnostic suivant l'une des revendications 4 ou 5,
**caractérisé en ce que**
le dispositif (171) de recueil de données est constitué sous la forme d'une boîte Internet de la chose, qui a une interface (A4) de communication, en particulier une antenne, pour la communication avec une infrastructure (W) de la technique d'information supérieure hiérarchiquement.

7. Capteur (161-164) de courant d'un système (130;230) de diagnostic suivant l'une des revendications 1 à 6,
**caractérisé en ce qu'**
une partie (161a-164a) du capteur de courant peut, pour envelopper l'un, à lui associé, des câbles (1-4) de jonction électrique, être ouverte à la manière d'un collier.

8. Capteur (161-164) de courant suivant la revendication 7, **caractérisé en ce que**
la partie du capteur de courant, qui est constituée à la manière d'un collier, forme une partie d'un noyau (SK) de capteur et pénètre au moins en partie dans la conduite (140) de câble.

9. Capteur (161-164) de courant suivant l'une des revendications 7 ou 8,
**caractérisé en ce que**
le capteur de courant a une largeur de 50 mm au maximum, de préférence plus petite que 45 mm.

10. Capteur (161-164) de courant suivant l'une des revendications 7 à 9,
**caractérisé en ce que**
le capteur de courant a une profondeur de 50 mm au maximum, de préférence plus petite que 40 mm.

11. Capteur (161-164) de courant suivant l'une des revendications 7 à 10,
**caractérisé en ce que**
le capteur de courant a une longueur de 70 mm au maximum, de préférence plus petite que 45 mm.

12. Capteur (161-164) de courant suivant l'une des revendications 7 à 11,
**caractérisé en ce que**
le capteur de courant est constitué en capteur de courant continu ayant une plage de mesure de 10 à 200 mA.

13. Capteur (161-164) de courant suivant l'une des revendications 7 à 12,
**caractérisé en ce que**
le capteur de courant a respectivement une première borne (A1) constituée sous la forme d'une douille et une deuxième borne (A2) constituée sous la forme d'une partie mâle,
dans lequel la première borne est constituée sous la forme d'une douille USB à une extrémité d'un premier câble (K1), en particulier d'une longueur d'au moins 15 cm, et
dans lequel la deuxième borne est constituée sous la forme d'une partie mâle micro USB à une extrémité d'un deuxième câble (K2), en particulier d'une longueur d'au moins 15 cm.

14. Procédé de montage d'un système de diagnostic dans une installation de sécurité de passage à niveau, dont le circuit relais a des câbles de jonction électrique, dont au moins une pluralité passe au moins par tronçon dans une conduite de câble, dont le côté longitudinal d'accès est pourvu d'un recouvrement amovible,
**caractérisé**
**en ce que** l'on procure le recouvrement, de manière appropriée à la réception de plusieurs capteurs de courant du système de diagnostic et
**en ce que** l'on dispose, en particulier on fixe, plusieurs capteurs de courant dans la direction longitudinale de recouvrement les uns à côté des autres dans ce recouvrement,
dans lequel une partie de l'un respectif des capteurs de courant est, pour envelopper, l'un à lui associé, des câbles de jonction électrique, ouvert, à la manière d'un collier et refermé après l'insertion du câble de jonction.

15. Procédé suivant la revendication 14,
**caractérisé en ce que** l'
on raccorde les plusieurs capteurs de courant à un bus de communication en formant un dispositif de recueil de données et ils donnent à ce dispositif de recueil de données leurs données de mesure, en particulier, au moyen d'un protocole de transmission série.
